# EUROPEAN PATENT APPLICATION

(11) **EP 0 612 667 A2**
(43) Date of publication of application: **31.08.1994**
(21) Application number: 94301212.0
(22) Date of filing: 21.02.1994
(51) Int. Cl.: B65D 23/00, B65D 1/02

(54) **Base cup for spherical base plastic bottles**

(30) Priority: 23.02.1993 US 21389
(71) Applicant: GENERAL ELECTRIC COMPANY, Schenectady, NY 12345 (US)
(72) Inventor: Bailey, Orville G., Springfield, Massachusetts 01119 (US); Zuber, Peter J., Pittsfield, Massachusetts 01201 (US); Dennis, Tord W., North Royalton, Ohio 44131 (US)
(74) Representative: Pratt, Richard Wilson

(57) **Abstract**

A detachable reuseable support base cup for convex base non free standing plastic bottles to render them free standing, which base cup may be either a snap-fit or interference-fit or screw-fit base cup. This invention is also directed to a plastic bottle having in combination therewith the above base cup attached to the bottom of such plastic bottles.

## Description

The present invention is directed to a base cup that can be a snap-fit or an interference-fit or a screw-fit onto the base of rounded or spherical base plastic bottles in order to allow such bottles to be free standing. Spherical or rounded base plastic bottles appear to be one of the more efficient methods of bottle design particularly where pressure is developed in the bottle. Such a bottle, however, requires a support base in order to allow such a bottle to be free standing.

### Description of Related Art

Plastic bottles are well known in the art. Also well known in the art are many methods and designs for molding a particular base in a plastic bottle during the blow molding process of forming the bottle in order to allow the bottle to be free standing. For example such prior art includes U.S. Patents 4,989,738, 3,871,541, 3,598,270 and 3,935,955 all of which are directed to particular molded base designs fabricated during molding of the plastic bottle. When molding free standing plastic bottles that have a flat or concave base or particular design as described in the above patents, residual stresses are developed in the base of the bottles during molding. With pressure developing in the bottle from carbonation or just the weight of the liquid itself and particularly when the bottle is subjected to rewashing under elevated temperatures, this can aggravate the residual stresses in the base of the bottle and can result in failure of the bottle. These residual stresses in the base of the bottle develop during molding of the bottle. Stresses in a spherical or rounded base bottle, however, are greatly reduced during molding and is therefore a better bottle design particularly for bottles that are intended to be subjected to multiple washing and filling cycles with carbonated beverages. Even uncarbonated liquids develop pressure on the base of the bottle and therefore can result in failure due to aggravation of the residual stresses set up in the base.

Currently there is a need for plastic bottles that can withstand multiple washing cycles. Such reuseable bottles help to reduce the plastic waste problem that exists with the current one-use throw away polyethylene terephthalate (PET) plastic bottles. Copending European patent applications assigned to the same assignee of the instant invention, 93305560, 93305561 and 93305562, all of which are incorporated herein by reference, address the problem of plastic waste from plastic one-use throw away bottles by disclosing therein multilayer thermoplastic bottles that can endure multiple washing and filling cycles, while still maintaining good barrier properties for moisture and gases, particularly for carbonated beverages. It has also been determined that spherical or round base plastic bottles are one of the most efficient designs for such bottles, particularly those that are intended for containing carbonated beverages for the reasons described above.

Currently, plastic one-use throw away bottles, particularly the larger plastic bottles, have base cups which are adhesively attached to the bottom of such bottles and are therefore discarded with the one-use throw away bottle.

### Summary of the Invention

The present invention is directed to a base cup for a spherical or round base non-free standing plastic bottle. By attaching the base cup of the present invention to the base of the plastic bottle, it allows the plastic bottle to be free standing. The base cup of the present invention is a snap-fit or an interference-fit or a screw-fit base cup for such spherical or round base shaped bottle. The bottom of the base cup may be flat or it may be concave. The bottom of the base cup may also have at least one open portion therein. If the base cup is concave, it should have a rim portion surrounding and extending down from the concave portion to serve as the support means on a flat surface.

The present invention is further directed to a rewashable, refillable plastic bottle having in combination therewith the base cup of the instant invention. The plastic bottle with a spherical or round base is, therefore, free standing when the base cup is attached to the bottom of the bottle.

### Detailed Description of the Invention

As stated previously, the present invention is two-fold, namely a snap-fit or interference-fit or a screw-fit base cup for spherical or round base shaped plastic bottles and a free standing plastic bottle with the base cup attached to the bottom of the bottle. By free standing, it is meant that the plastic bottle with the snap-fit or interference-fit or screw-fit base cup in place is capable of standing alone on a flat surface without additional supportive means.

While the particular base cup of the present invention can be used with the one-use throw away plastic bottle, the base cup has particular significant use with the multilayer rewashable and refillable plastic bottles as disclosed in U.S. Patent 4,937,130, U.S. Patent 4,513,037, incorporated herein by reference and the copending Patent applications recited above which have also been incorporated herein by reference. With the snap-fit or interference-fit or screw-fit base cup, it can easily be replaced if lost during rewashing or it can be removed, rewashed as necessary, and reassembled with the bottle, or it can be replaced if the base cup becomes damaged. The advantage of the use of the base cup of the instant invention with the one-use throw away plastic bottle is that the base cup can be reused instead of being discarded with the bottle. It would also result in less waste and may even reduce the cost of producing the one-use throw away bottle since the base cup would be reuseable. If the base cup is to be left in place, the base cup may have at least one open portion in the bottom portion to allow for washing of the base cup during rewashing of the bottle.

The base cup is preferably thermoplastic and can be made of almost any type of thermoplastic. Preferably, the thermoplastic should be of the type that would be able to withstand hot washing cycles used with rewashing plastic bottles or if separately rewashing the base cup itself is wanted. The thermoplastic suitable for use in making the base cup of the present invention may be, for example, polycarbonate , polybutylene or polyethylene terephthalate, high impact polystyrene (HIPS), acryonitrile- butadiene- styrene polymers (ABS), polyethylene, styrene- acrylonitrile polymers (SAN), etc. The thermoplastic may be clear, translucent or pigmented. They may also contain such additional materials as organic or inorganic fillers, stabilizers, anti-oxidents, etc. Depending on the size of the base cup , it may be injection molded, compression molded or it can conceivably be hot or cold stamped or thermoformed. However, injection molding or thermoforming is the preferred method for preparing the base cup of the instant invention.

### Description of the Drawings

FIG's 1, 2, 3, 4, and 5 are section views of several embodiments of the base cup of the present invention.

FIG's 6 and 7 are section views of several embodiments of the base cup in combination with a plastic bottle.

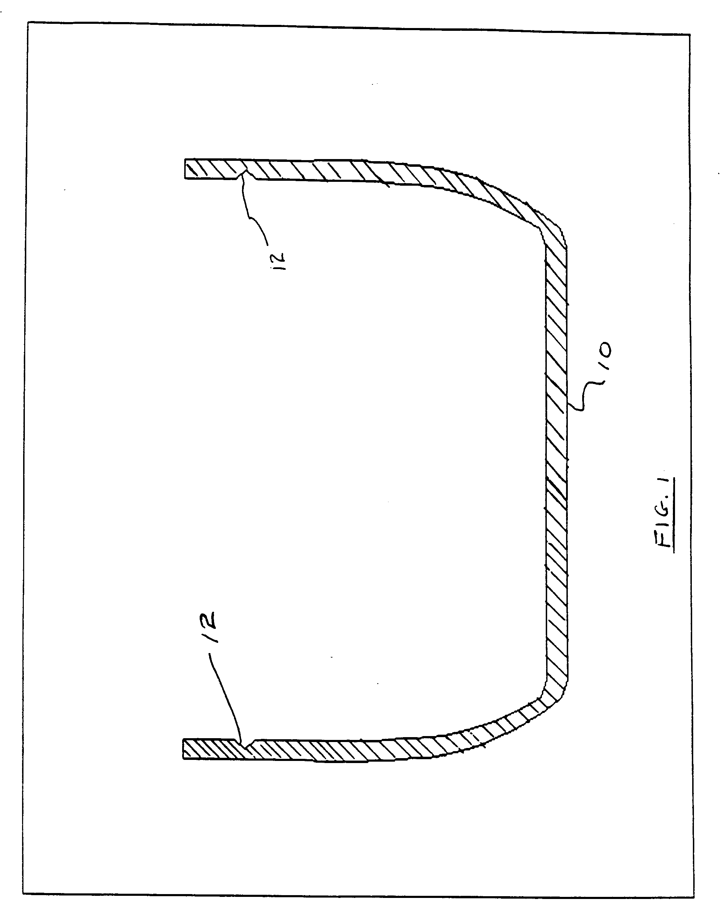

As shown, FIG. 1. is one embodiment of the instant invention showing a base cup having a flat bottom 10 and an annular groove 12 to mate with an annular protrusion on a bottle.

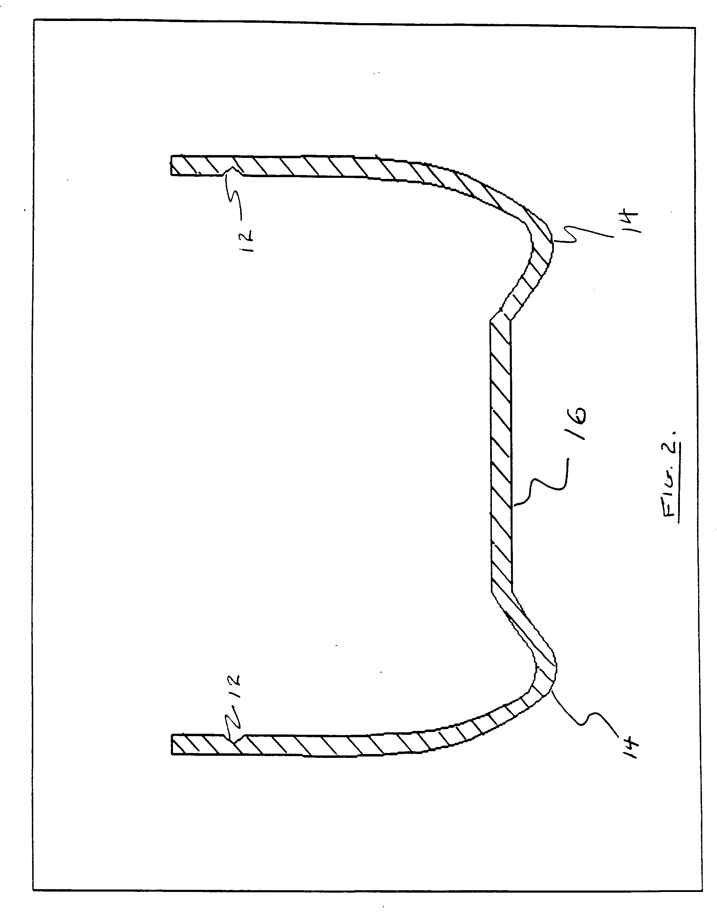

FIG. 2 is another embodiment of the present invention with a rim portion 14, an annular groove 12, and concave portion 16.

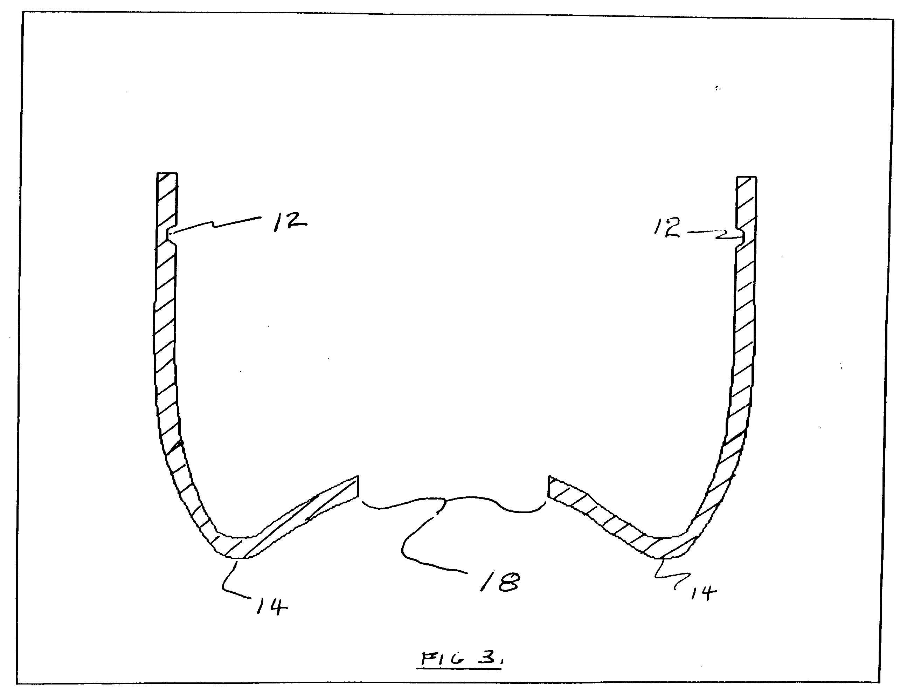

FIG. 3 is yet another embodiment of the present invention wherein the base cup has an opening 18 which opening is circular, a rim cap 14 and an annular groove 12 to mate with an annular protrusion on a bottle.

FIG. 4 illustrates another embodiment of the snap-fit base cup, wherein the base cup has "fingers" or "finger slots" 20 and having an interrupted annular groove 12. The snap-fit base cup of FIG. 4 also has a concave base 16 and a rim portion 14.

FIG. 5 is another embodiment of the present invention wherein the base cup has several annular grooves 12 for mating with the annular protrusions on a bottle and a flat bottom 10. These grooves are also representative of screw thread grooves being an annular concentric spiral groove.

FIG. 6 is another embodiment of the present invention of the snap-fit base cup of FIG. 3 on the plastic bottle 22 with opening 18 in the base and rim portion 14 and an annular groove 12 mating with an annular protrusion on a bottle conciding with annular groove 12.

FIG. 7 is another embodiment of the base cup 24 in snap-fit attachment to plastic bottle 26 with opening 18 wherein base cup 24 has a lip 28 which snap-fits over the protruded portion 30 of a bottle.

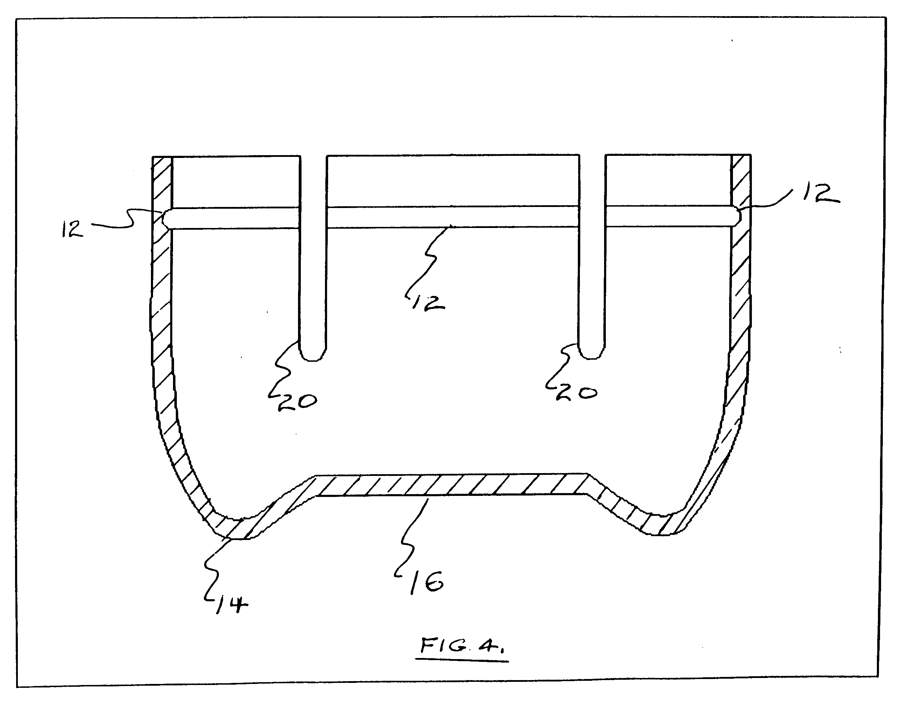

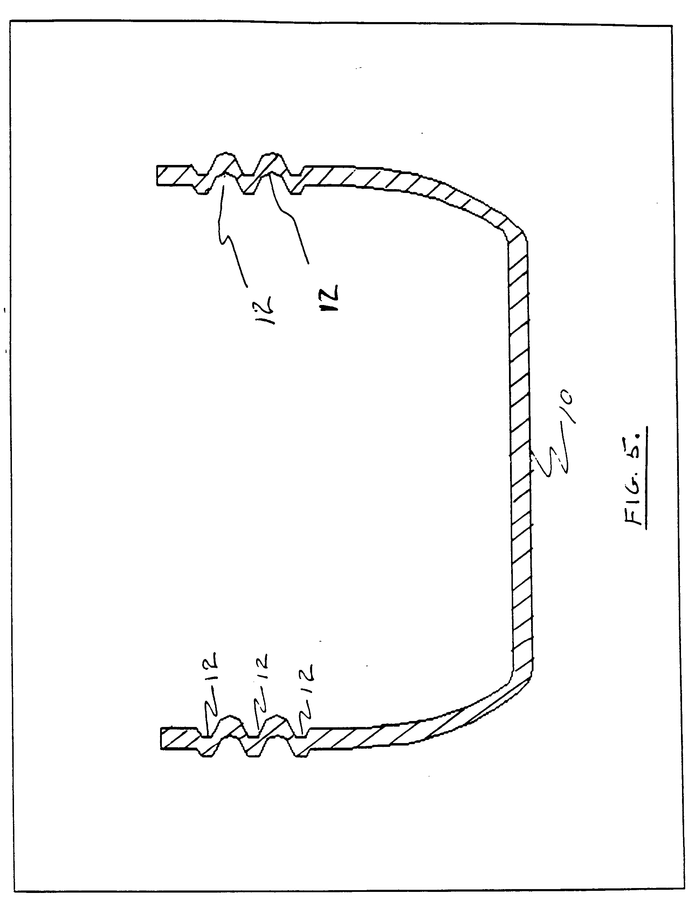

The above FIG.'s are merely illustrative of the various concepts of the base cup present invention. Other concepts can be designed with respect to a snap-fit or interference-fit or screw-fit of the base cup and it is within the skill of the artisen or designer thereof. For example, the base cap and bottle may have more that one snap-fit annular protrusion on the bottle and corresponding annular- grooves on the inside of the cup as shown in FIG. 5. Also the base cup may be attached by what is called interference-fit. This can be accomplished by molding a rough surface on the outside of the bottle and/or on the inside surface of the base cup that would come into contact with the bottle. By force fitting the cup onto the bottle, the cup would be held in place by the friction of the rough surface or surfaces. Conceivably, just the force fit of the base cup onto the plastic bottle may be sufficient to hold it in place without the rough surface or surfaces. However, in such a case, there is probably more of a possibility that the base cup could accidentally come off the bottle during shipping or handling. Even so, the advantage of the base cup of the instant invention is that it can be easily reattached or replaced. Further, to ensure a tight fit but easy to snap in place, the base cup may have what is sometimes called "fingers" or "finger slots" or an interrupted annular groove. They may even be referred to as a modified cantilever snap-fit. FIG. 4 illustrates this embodiment of the present invention.

In addition, the base cup of the present invention may even be a screw-fit wherein the bottle has screw thread protrusions and the base cup has corresponding screw thread grooves on the inside surface thereof for a screw-fit of the base cup onto the plastic bottle. This screw thread groove and screw thread protrusion may be referred to as an annular concentric spiral groove and annular concentric spiral protrusion having at least two turns. The bottle and base cup in addition to the screw threads could have an annular protrusion on the bottle and a corresponding annular groove on the inside of the base cup for a snap-fit after the screw-fit base cup is applied which would in effect lock the base cup onto the bottle. Such an attachment would probably remain attached to the bottle during rewashing.

The present invention is further directed to a plastic bottle having in combination therewith the snap-fit or interference-fit or screw-fit base cup. The plastic bottle that can be employed in the practice of the invention can be any of the known plastic bottles that have a spherical or round base and are not free standing without supportive means. However, where rewashing is wanted for plastic bottles having such a base, then the bottles disclosed in copending European Applications 93305560, 93305561 and 93305562 which have been incorporated herein by reference, are suitable for use with the base cup of the present invention in order to allow such bottles to be free standing. These bottles are multilayer plastic bottles having multiple washing and filling capability. When such bottles are utilized for carbonated beverages for example, it has been found that a spherical base may be better suited due to the pressures developed within the bottle from the carbonation. However, such spherical base bottles are not limited to carbonated liquids only since uncarbonated liquids exert a pressure on the base of the bottle.

The base cup of the present invention also lends itself to rewashing. As such, the bottle and base cup can be separated, washed as individual components and then reassembled with the bottle for use again. Alternatively, the bottle and base cup can be washed by leaving the base cup in place.

As used in the present invention, snap-fit is a fastening technique well suited for use with plastic parts, as in this case, the base cup and bottle. This method allows two mating items to be attached through an interlocking configuration molded into the parts themselves. The force required to assemble the components and the allowable deflection of the part can also be modified by the design of the configuration of the mating parts. There are generally two basic types of snap-fits, namely the cantilever snap-fit or the annular snap-fit. The cantilever snap-fit is better described as a protrusion extending from the nominal wall of a part with a hook or bead at the end to allow the part to interlock with its mating piece. These latches are generally molded as cantilever beams.

The other basic type of snap-fit is referred to as an annular snap-fit which is the type preferably employed in the present invention. The annular snap-fit is comprised of two mating parts generally circular or elliptical in shape. One of the mating parts has a protrusion which runs around the circumference of the part, in this case on the outside portion of the bottle, forming a lip. This engages a groove on the inside of the base cup of the present invention. Generally, an annular snap-fit is described as "molded as a beam of infinite length resting on a resilient foundation".

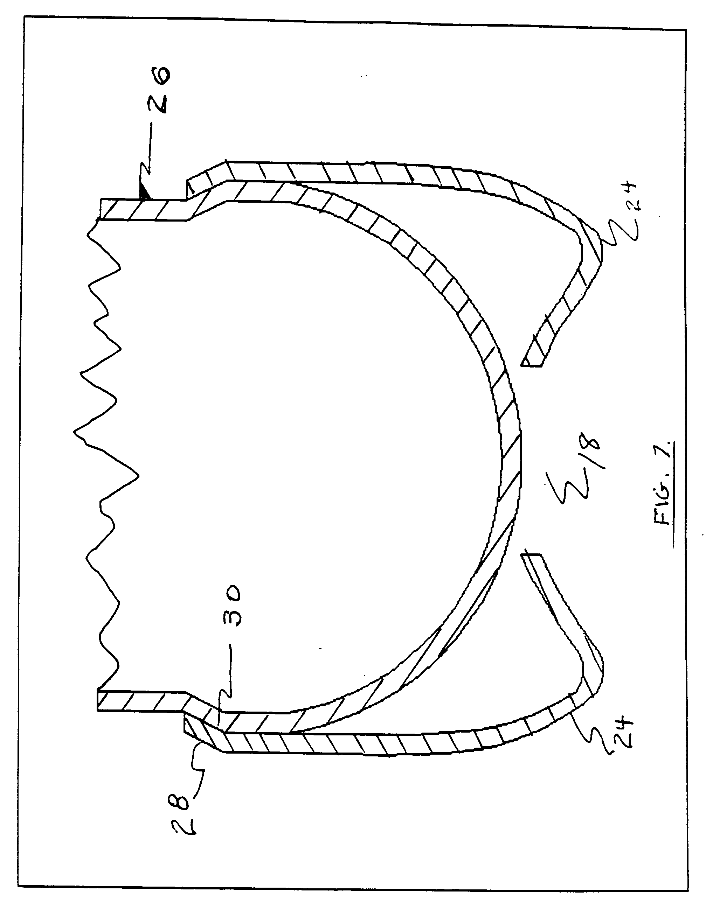

While it is described above as a protrusion on the bottle and a groove on the inside of the base cup, variations can be incorporated in the design of the base cup and corresponding bottle to which it is attached. FIG. 7 demonstrates one such variation. Further, two or more protrusions and corresponding groves can be employed as illustrated in FIG. 7. While FIG. 4 illustrates yet another embodiment using "fingers" or "finger slots," this may be considered as a modified annular snap-fit employing a modified cantilever snap-fit or an interrupted annular groove.

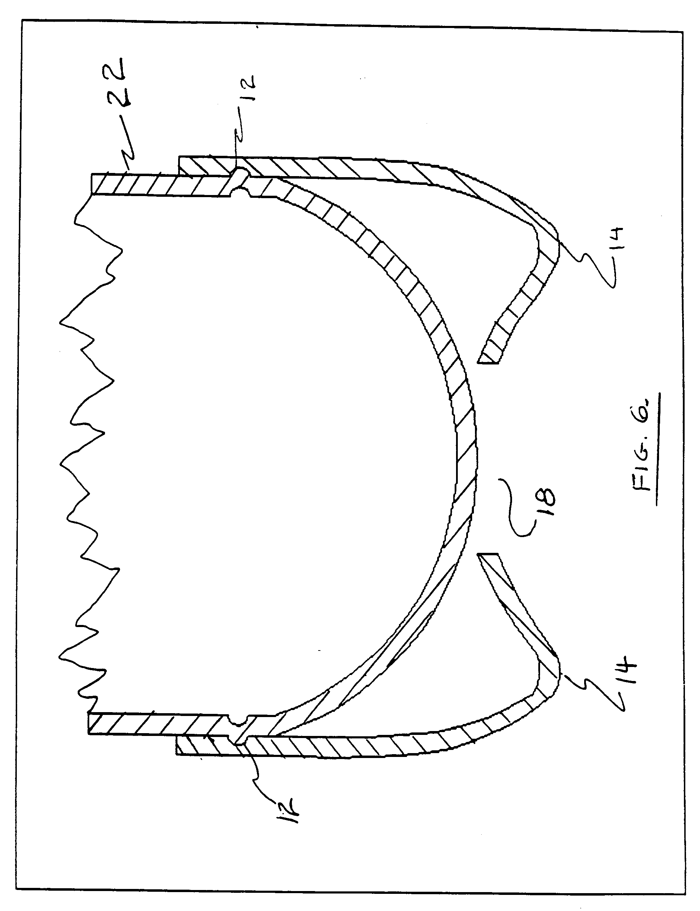

A spherical or round base plastic bottle having in combination therewith the present base cup is also part of the present invention. The bottle consists of in combination a plastic bottle and the base cup wherein the base has a flat bottom and may have at least one opening in the bottom portion of the base cup. Alternatively, included in the present invention is a plastic bottle having in combination therewith a plastic base cup wherein the plastic base cup has a center concave portion on the bottom and a bottom portion or rim surrounding and extending down from the concave portion. FIG. 6. illustrates this embodiment wherein 22 is a multilayer plastic bottle with base cap having an opening 18 in the bottom and a rim 14.

As stated previously, the base cup instead of a rim 14, can be flat bottom with or without a center opening. The base cup can also be of any other configuration to allow or provide snap-fit or interference-fit or screw-fit attachment as described previously.

With the base cup of this invention, spherical or round base plastic bottles can be made free standing. With such a base cup, rewashing of the bottles insures thorough cleaning including the base cup since it can be removed and washed as an independent item. Alternatively, if not removed, then the base cup with at least one opening or various shaped openings in the bottom of the base cup ensures thorough washing of the inside of the base cup. An opening or openings in the bottom of the base cup also reduces the weight of the total combination of the bottle and base cup. Also by virtue of the base cup being of the type described herein, the cups can be replaced if they accidentally come off or are damaged or they can be changed for cosmetic purposes such as color, printing thereon or fanciful designs. If damaged, the base cup can be merely replaced without throwing away the whole bottle which would occur if the base cup was adhesively attached to the bottle, as in the current one-use throw away plastic bottles.

The above described embodiments are only illustrative of the disclosed embodiments of the present invention and other embodiments, variations, modifications, and changes in detail can be devised without departing from the scope and spirit of the invention as defined in the following claims.

## Claims

1. An independent detachable reusable support base cup for a convex base non-free standing plastic bottle to provide a free standing plastic bottle without additional supportive means, which base cup is selected from the group consisting of a snap-fit and screw fit base cup and is made of a thermoplastic material.

2. The base cup of claim 1. wherein the bottom thereof is flat.

3. The base cup of claim 1. wherein the center of the bottom is concave and has a bottom rim portion surrounding and extending down from the concave portion.

4. The base cup of claim 1. wherein the bottom has at least one open portion in the bottom of the base cup.

5. The base cup of claim 1. wherein the base cup is a snap-fit base cup having at least one concentric annular groove on the inside thereof.

6. The base cup of claim 5. wherein the at lease one concentric annular groove on the inside of the base cup is an interrupted concentric annular groove.

7. The base cup of claim 1. wherein the base cup is a screw-fit base cup having a concentric spiral annular groove on the inside thereof that conforms to a screw thread and having at least two turns.

8. An independent detachable reusable interference-fit support base cup for a convex base non-free standing plastic bottle to provide a free-standing plastic bottle without additional supportive means which base cup is made of a thermoplastic material and has on the inside surface of the upper portion thereof a rough surface.

9. The base cup of claim 8. wherein the inner surface thereof has no rough surface on the inside thereof.

10. A convex base plastic bottle having in attachable combination to the base thereof the detachable base cup of any preceding claim.

11. The plastic bottle of claim 10. wherein the base cup is the base cup of any one of Claims 1 to 9.

12. The plastic bottle of Claim 10 or Claim 11, wherein the plastic bottle is a multilayer plastic bottle capable of rewashing and refilling comprising adjacent layers of an aromatic polycarbonate and an amorphous polyamide.
